Europäisches Patentamt

**European Patent Office**

**Office européen des brevets**

(19)

(11) Numéro de publication: **0 139 600**
A2

(12) # DEMANDE DE BREVET EUROPEEN

(21) Numéro de dépôt: **84420159.0**

(22) Date de dépôt: **25.09.84**

(51) Int. Cl.⁴: **G 03 B 15/08**

(30) Priorité: **26.09.83 FR 8315734**

(43) Date de publication de la demande:
**02.05.85 Bulletin 85/18**

(84) Etats contractants désignés:
**CH DE GB IT LI**

(71) Demandeur: **Second, Paul**
**251 "Les Erables" La Duchère**
**Lyon 9ème Rhône(FR)**

(72) Inventeur: **Second, Paul**
**251 "Les Erables" La Duchère**
**Lyon 9ème Rhône(FR)**

(74) Mandataire: **Maureau, Pierre et al,**
**Cabinet GERMAIN & MAUREAU Le Britannia - Tour C 20,**
**Boulevard E. Déruelle**
**F-69003 Lyon(FR)**

(54) **Dispositif pour la projection de decors pour prises de vues photographiques.**

(57) L'invention a pour objet un dispositif pour la projection de décors pour la prise de photographies et notamment la réalisation de portraits en studio. Ce dispositif comprend :

- une lentille de Fresnel (3) apte à supporter, sur une de ses faces, un sujet dont l'image projetée doit former le fond décoratif et à recevoir, sur son autre face le faisceau lumineux d'une source lumineuse (4) dont le fonctionnement est synchronisé avec l'appareil photographique (18),

- un objectif (5) de même axe principal que la lentille (3) et placé sur le trajet du faisceau lumineux réfracté par celle-ci,

- et un miroir (6) placé au-delà de l'objectif (5) par rapport à la lentille (3) et réfléchissant l'image de l'object focalisée par celui-ci dans le champ de L'appareil photographique.

Application à la réalisation de décors pour la prise de photographies.

FIG.1

EP 0 139 600 A2

1

## "Dispositif pour la projection de décors
## pour prises de vues photographiques"

La présente invention a pour objet un dispositif pour la projection de décors pour la prise de vues photographiques et notamment la réalisation de portraits en studio.

Ces photographies ou portraits sont communément réalisés à l'aide de fonds neutres, blancs, noirs ou gris. Cependant, lorsqu'un effet plus artistique est recherché, il est parfois nécessaire de créer un certain décor.

La solution la plus simple, consiste à réaliser les fonds à l'aide de papiers ou tissus colorés. Cependant, la nécessité de disposer d'un grand choix de coloris, impose la possession d'un grand nombre de ces fonds et pose donc des problèmes de prix de revient et de stockage de ces fonds dans le studio. En outre, leur manipulation n'est pas toujours aisée.

Une autre solution consiste à peindre un décor sur un fond ou sur des volumes. Mais le changement d'ambiance est long et le même problème de stockage et de prix de revient que précédemment se pose.

D'autres solutions plus modernes consistent à projeter le fond désiré sur une surface de projection placée derrière le sujet à photographier. Cette projection du fond peut être réalisée à l'aide d'un projecteur-spot. Ce projecteur-spot, qui comprend entre autres un iris et un masque, est placé devant la torche du flash éclairant la surface de projection ou le sujet à photographier et permet par la variation de l'ouverture de l'iris, ou à l'aide du masque de projeter des zones de lumière de formes quelconques (cercles, triangles, rectangles,...etc) ou de projeter des grilles ou autres formes de petite surface.

Cet appareil est utilisé couramment pour éclairer de petites surfaces, mais un recul important est nécessaire pour obtenir de grandes projections et le projecteur chauffe énormément, ce qui limite le choix des sujets à projeter. En outre, il ne permet que la projection d'ombres ou de zones de lumière.

Dans un autre projecteur de fond dit "épiscope", une image ou un objet est placé sur un plateau éclairé par un flash, focalisé par un objectif et enfin réfléchi par un miroir semi-transparent sur l'objectif de l'appareil photographique. Le sujet à photographier est placé devant un écran spécial et l'appareil photographique en prend la photo à travers

2

le miroir semi-transparent, l'image réfléchie par ce miroir se juxtaposant à celle du sujet par le biais de l'écran spécial sans lui passer dessus.

Avec ce projecteur de fond, la photographie du fond n'est possible qu'avec l'écran spécial et le fond projeté n'est visible que par le viseur de l'appareil photographique. L'éclairage du sujet à photographier ne doit pas atteindre le fond, sinon il y a destruction totale ou partielle de la projection, et est de ce fait limité.

Le plateau de ce projecteur est de dimensions réduites et ne permet de projeter que des documents ou objets opaques ou plats, et une "torche crayon" complémentaire est nécessaire pour éclairer l'objet à projeter. En outre cet appareil est encombrant, et donc limite les possibilités de déplacement de l'appareil photographique, d'un prix de revient très élevé et ne permet pas l'éclairage du sujet à photographier.

Le but de l'invention est de remédier à ces inconvénients et notamment de prévoir un projecteur de décors pour prises de vues, de conception simple, maniable, peu encombrant et de prix réduit, tout en permettant la projection de sujets de dimensions assez grandes, sur n'importe quel fond ou volume ainsi que sur le sujet à photographier, pouvant être utilisé pour l'éclairage de ce sujet et offrant de nombreuses possibilités de réalisation de décors.

A cet effet, le dispositif qu'elle concerne comprend :

- une lentille de Fresnel apte à supporter, sur une de ses faces, un sujet dont l'image projetée doit former le décor et à recevoir, sur son autre face le faisceau lumineux d'une source lumineuse dont le fonctionnement est synchronisé avec l'appareil photographique,

- un objectif de même axe principal que la lentille et placé sur le trajet du faisceau lumineux réfracté par celle-ci,

- et un miroir placé au-delà de l'objectif par rapport à la lentille et réfléchissant l'image de l'objet focalisée par celui-ci dans le champ de l'appareil photographique.

La source lumineuse est avantageusement constituée par la torche d'un flash électronique appartenant à l'utilisateur.

L'image du sujet obtenue par ce dispositif constitue le décor et est projetée sur un écran ou volume placé derrière le sujet à photographier ou sur le sujet lui-même et peut être photographiée en même temps que lui. Cette image est réelle et visible par tous, ce qui permet une bonne appréciation de l'effet pouvant être obtenu. Une lampe "pilote", combinée à la torche du flash, permet de visualiser le décor projeté en dehors des prises de vues.

La taille de l'image peut être modifiée par déplacement du dispositif par rapport au plan de projection ou par l'emploi d'un objectif à focale variable.

Avantageusement, la tête du dispositif sur laquelle est placé le miroir peut pivoter et le miroir est lui-même orientable, de sorte que la position de l'image peut être modifiée aussi bien en direction horizontale qu'en direction verticale.

De toute façon l'invention sera mieux comprise et d'autres caractéristiques seront mises en évidence à l'aide de la description qui suit, en référence au dessin schématique annexé représentant, à titre d'exemples non limitatifs, plusieurs formes d'exécution et exemples d'utilisation de ce dispositif pour la projection de décors :

Figure 1 en est une représentation schématique ;

Figure 2 et 3 sont à échelle réduite, des vues similaires à figure 1 montrant d'autres formes de réalisation de ce dispositif ;

Figures 4 à 6, sont des représentations schématiques montrant différents exemples d'utilisation de ce dispositif ;

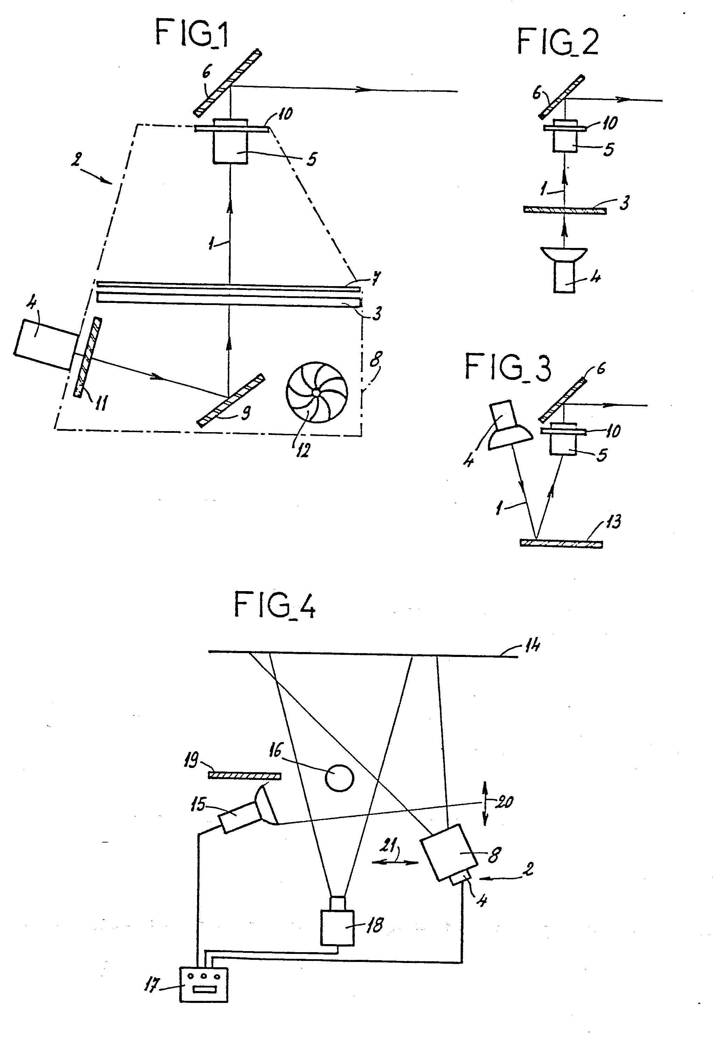

Ainsi que le montre la figure 1, le dispositif (2) pour la réalisation de décors selon l'invention est formé essentiellement par un boîtier (8) (en traits mixtes sur la figure 1) dans lequel sont placés une lentille de Fresnel (3) éclairée par une torche (4), un objectif (5) et un miroir de renvoi (6).

La lentille de Fresnel (3) est placée horizontalement dans le boîtier (8) et il lui est associé une plage de travail (7) horizontale, dont les dimensions sont par exemple de 30 cm x 30 cm et sur laquelle peut être placé un sujet dont l'image projetée par ce dispositif (2) constituera le décor.

Ce sujet peut être formé par une diapositive, des filtres colorés, ou un objet quelconque, plat ou tridimensionnel.

Une torche (4) d'un flash électronique synchronisé avec l'appareil photographique et pouvant appartenir à l'utilisateur, est fixée sur le boîtier (8). Le faisceau lumineux émis par cette torche (4), et le trajet qu'il effectue sont matérialisés sur le dessin par un rayon lumineux (1).

Ce faisceau est réfléchi par un miroir plan (9) sur la lentille (3). Ses rayons sont réfractés par cette lentille sur l'objectif (5) qui possède un dispositif de mise au point dont l'axe principal est confondu avec celui de la lentille et qui est placé au-dessus de celle-ci. Cet objectif (5) donne du sujet placé sur la plage de travail associée à la lentille (3) une image réelle qui est réfléchie par le miroir de renvoi (6), placé au-dessus de cet objectif (5), dans le champ de l'appareil photographique. Ce miroir (6) est monté sur une tête pivotante (10) du dispositif, pouvant pivoter de 360° autour d'un axe vertical, et peut lui-même pivoter autour d'un axe horizontal. La projection peut être ainsi orientée selon deux directions, l'une horizontale et l'autre verticale. L'objectif (5) peut être changé, ou remplacé par un objectif à focale variable pour faire varier la taille de l'image projetée. Le dispositif (2) peut également être monté sur des roulettes ou placé sur une table roulante et son déplacement vers ou à distance du champ photographique permet de faire varier la dimension de la projection.

L'utilisateur peut ainsi positionner et régler d'une façon très précise l'image projetée sur un écran ou autre. Un cache de forme variable peut être placé sur la plage de travail (7) de la lentille (3), de façon à créer des zones de lumière de forme déterminée ; le dispositif (2) fonctionne alors comme un projecteur-spot. Des filtres colorés peuvent également être utilisés avec ce dispositif (2). La lampe pilote (non représentée sur le dessin) est incorporée à la torche (4) et permet de visualiser la projection obtenue avec ce dispositif en dehors des prises de vue.

Un verre isolant (11) placé devant la torche (4), à l'intérieur du boîtier (8) empêche la propagation de la chaleur dans celui-ci. En outre, un ventilateur (12) est également monté à l'intérieur de ce boîtier pour en assurer le refroidissement.

Les figures 2 et 3 illustrent d'autres formes de réalisation de ce dispositif dans lesquelles les mêmes éléments sont désignés par les mêmes références.

Dans l'exemple de la figure 2, la torche (4) est placée sous la lentille de Fresnel (3), dans son axe. Le faisceau qu'elle émet est donc dirigé directement sur la lentille (3) et n'a pas besoin d'être réfléchi par un miroir (9).

Dans l'exemple de la figure 3, la lentille de Fresnel est remplacée par un miroir de Fresnel (13) horizontal. La torche (4) est placée au-dessus de ce miroir (13), et le faisceau qu'elle émet est dirigé sur ce miroir (13) et réfléchi par lui sur l'objectif (5). Cette forme de réalisation du

5

dispositif présente l'avantage d'un encombrement minimal.

Les figures 4 à 6 montrent différents exemples d'utilisation de ce dispositif (2) pour la réalisation de décors.

Ainsi que le montre la figure 4, deux torches sont nécessaires pour une installation de base, l'une (4) étant incorporée au dispositif (2), et servant à la projection du décor sur une surface (14) èt l'autre (15) éclairant le sujet (16) à photographier. Ces deux torches (4 et 15) sont raccordées au même générateur flash (16), lui-même relié à l'appareil photographique (18), afin d'être déclenchées en synchronisme, lors de la prise de vue. Un panneau masque amovible (19) est placé entre la torche (15) et la surface (14), afin que son faisceau lumineux n'interfère pas avec celui de la torche (15). Ce panneau (19) peut masquer plus ou moins la torche (4) ou être enlevé selon l'effet plus ou moins contrasté désiré. De même, le dispositif de projection (2) peut être déplacé par rapport au sujet et à la surface, comme illustré par les doubles flèches (20 et 21).

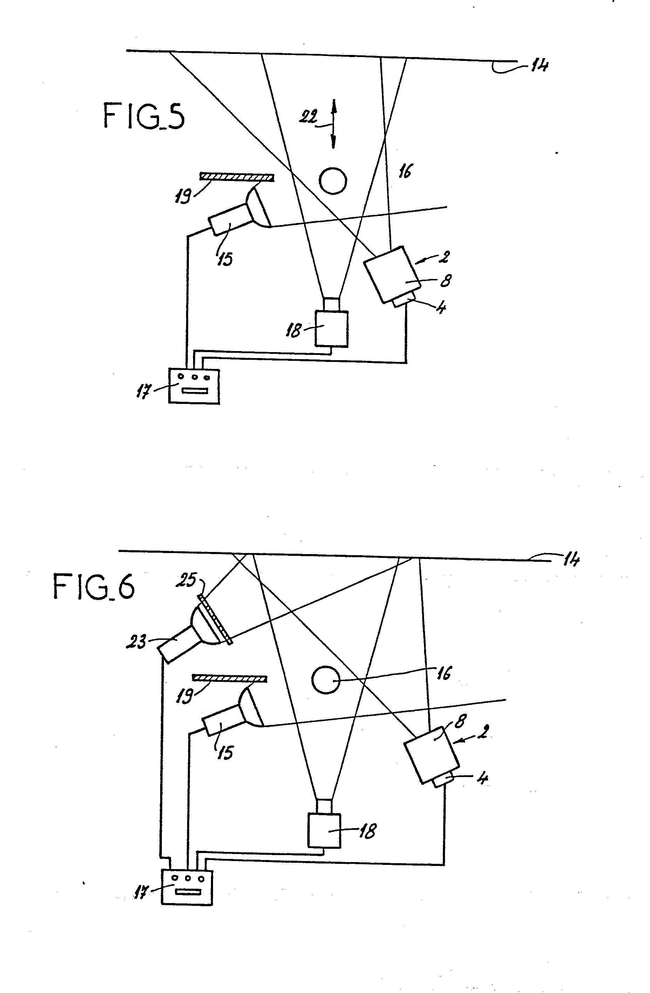

Dans l'exemple de la figure 5, le fond est projeté à la fois sur le sujet (16) et sur la surface (14). Cette disposition permet d'obtenir des effets très intéressants et très variés.

On peut, par exemple, montrer le sujet à l'intérieur d'un objet semi-transparent tel qu'une bouteille...

Dans cette forme d'utilisation, le sujet peut être placé plus ou moins près de l'écran et déplacé par exemple selon les directions de la double flèche (22).

Le panneau masque (19) peut être utilisé ou non.

Dans une variante de cette forme d'utilisation, un masque en carton est placé sur la plage de travail (7) du dispositif (2) de façon que la projection passe à travers le sujet (16) mais sans l'éclairer, le masque cache alors la partie du faisceau éclairant le sujet (16).

L'exemple d'utilisation de la figure 6, correspond à celui de la figure 5, dans lequel une troisième torche (23) est employée. Cette torche (23) est branchée sur le même générateur (17) que les deux autres torches (4 et 15), et éclaire la surface (14) sur lequel est projeté le décor avec des filtres colorés (25), ce qui permet d'augmenter considérablement les effets.

Le panneau masque (19) peut être employé ou enlevé.

Dans cette forme d'utilisation du dispositif (2), un second générateur pourrait être également employé sur lequel serait uniquement branchée, par exemple, la lampe torche (4) pour la projection du décor. Ainsi la puissance de projection serait considérablement augmentée et il serait possible de projeter le décor sur une grande surface ; en outre on disposerait d'une seconde source de lumière pour éclairer le sujet (16).

Bien entendu, tous les exemples d'utilisations de ce dispositif décrits ici ne sont pas limitatifs, et une infinité d'autres modes d'utilisation sont possibles.

Le résultat de la projection peut être modulé à volonté, celle-ci peut être plus ou moins contrastée, colorée entièrement ou partiellement, et réglée aussi bien en dimension qu'en position.

Ce dispositif permet la réalisation de photos avec des décors variés (portrait, mode, industrie,...etc), l'accès de la plage de travail est facile et permet de composer facilement la projection.

Bien entendu, la présente invention ne se limite pas aux formes d'exécution décrites ci-dessus, elle en embrasse au contraire toutes les variantes d'exécution mettant en oeuvre des moyens équivalents.

7

## - REVENDICATIONS -

1.- Dispositif pour la projection de décors, pour la prise de photographies ou similaires, caractérisé en ce qu'il comprend :

- une lentille de Fresnel (3) apte à supporter, sur une de ses faces, un objet dont l'image projetée doit former le décor et à recevoir, sur son autre face le faisceau lumineux d'une source lumineuse (4) dont le fonctionnement est synchronisé avec l'appareil photographique (18),

- un objectif (5) de même axe principal que la lentille (3) et placé sur le trajet du faisceau lumineux réfracté par celle-ci,

- un miroir (6) placé au-delà de l'objectif (5) par rapport à la lentille (3) et réfléchissant l'image de l'objet focalisée par celui-ci dans le champ de l'appareil photographique.

2.- Dispositif selon la revendication 1, caractérisé en ce que la source lumineuse est formée par une torche (4) d'un flash électronique montée sur le boitier (8) du dispositif.

3.- Dispositif selon l'une des revendications 1 ou 2, caractérisé en ce que le miroir (6) est monté sur une tête (10) pouvant pivoter autour d'un axe vertical, et en ce qu'il est lui-même monté pivotant autour d'un axe horizontal.

4.- Dispositif selon l'une quelconque des revendications 1 à 3, caractérisé en ce qu'une plaque de verre isolant (11) est placée devant la torche (4).

5.- Dispositif selon l'une quelconque des revendications 1 à 4, caractérisé en ce qu'un ventilateur (12) est prévu dans le boîtier (8).

6.- Dispositif selon l'une quelconque des revendications 2 à 5, caractérisé en ce que la torche (15) éclairant le sujet à photographier est branchée sur le même générateur flash (17) que la torche (4) du dispositif (2).

7.- Dispositif selon l'une quelconque des revendications 1 à 6, caractérisé en ce qu'une plage de travail horizontale (7) est associée à la lentille (3).

FIG_1

FIG_2

FIG_3

FIG_4

0139600

FIG.5

FIG.6